# EUROPÄISCHE PATENTSCHRIFT

(11) **EP 3 102 446 B1**
(45) Veröffentlichungstag und Bekanntmachung des Hinweises auf die Patenterteilung: **27.12.2017**
(21) Anmeldenummer: 15704242.5
(22) Anmeldetag: 02.02.2015
(51) Int. Cl.: B60G 15/12, B60G 17/052, B60G 17/048, F16F 9/05, F16F 9/512, F16F 9/342

(54) **LUFTFEDERANORDNUNG MIT INTEGRIERTEM STEUERVENTIL UND STANGENFÖRMIGEM BETÄTIGUNGSMITTEL**
AIR SPRING ASSEMBLY HAVING AN INTEGRATED CONTROL VALVE AND A ROD-SHAPED ACTUATING ELEMENT
ENSEMBLE DE SUSPENSION PNEUMATIQUE COMPRENANT UNE SOUPAPE DE COMMANDE INTÉGRÉE ET UN MOYEN D'ACTIONNEMENT EN FORME DE TIGE

(30) Priorität: 03.02.2014 DE 102014101277
(43) Veröffentlichungstag der Anmeldung: 14.12.2016
(73) Patentinhaber: KNORR-BREMSE Systeme für Nutzfahrzeuge GmbH, 80809 München (DE)
(72) Erfinder: DALI, István, H-6000 Kecskemét (HU); KANTOR, Kornél, H-6000 Kecskemét (HU); VASS, Zoltan, H-6000 Kecskemét (HU); KONCZ, László, H-6000 Kecskemét (HU)
(86) Internationale Anmeldenummer: PCT/EP2015/052057
(87) Internationale Veröffentlichungsnummer: WO 2015/114133

(56) Entgegenhaltungen:
- EP-A2- 0 670 231
- EP-A2- 1 327 538
- EP-A2- 2 131 059
- EP-A2- 2 581 625
- DE-A1- 4 409 252
- DE-A1- 10 003 045
- DE-A1-102010 012 346
- DE-A1-102010 026 236
- DE-B3-102009 046 290

## Beschreibung

### Gebiet der Erfindung

Die Erfindung betrifft eine Luftfederanordnung mit einer integrierten Steuerventilanordnung zur Druckluftbeaufschlagung einer zwischen einem Außenrohr, einem Abrollrohr und einem diese Bauteile verbindenden Luftfederbalg gebildeten Federdruckkammer, wobei die Steuerventilanordnung aus einem einzelnen Belüftungsventil und einem einzelnen Entlüftungsventil besteht, die durch ebenfalls integrierte mechanische Betätigungsmittel nach Maßgabe der Luftfederhubstellung zum Be- oder Entlüften der Federdruckkammer betätigbar sind.

Das Einsatzgebiet der Erfindung erstreckt sich vornehmlich auf die Fahrzeugtechnik. Im Bereich des Fahrwerks von Nutzfahrzeugen kommen beispielsweise Schwingungsdämpfer zum Einsatz, die ein meist hydraulisches Dämpfungselement und eine hiermit zusammenwirkende Luftfederanordnung umfassen. Im Sinne einer integrierten Bauweise weist das Dämpfungselement üblicherweise ein Behälterrohr auf, welches mit einem Abrollrohr der Luftfeder verbunden ist, wobei das Abrollrohr über einen als Rollbalg wirkenden Luftfederbalg mit einem konzentrisch und relativ zum Abrollrohr axial beweglich angeordneten Außenrohr verbunden ist. Der Luftfederbalg, das Abrollrohr sowie das Außenrohr begrenzen eine unter Luftdruck zur Federung stehende Federdruckkammer.

Mit derartigen Schwingungsdämpfern ist beispielsweise die Aufhängung eines Fahrerhauses auf einem Fahrwerk eines Nutzfahrzeuges ausgestattet, um die von der Straße über die Radaufhängung in das Fahrwerk eingeleiteten Schwingungen vom Fahrerhaus weitgehend fern zu halten.

### Hintergrund der Erfindung

Aus der DE 10 2010 012 346 A1 geht eine Luftfederanordnung für ein Nutzfahrzeug hervor, bei welcher innenliegend eine Steuerventilanordnung vorgesehen ist, um Druckluft bezüglich der Federdruckkammer zu- oder abzuführen. Über ebenfalls innerhalb der Federdruckkammer angeordnete mechanische Betätigungsmittel ist die Steuerventilanordnung je nach Höhenniveau ansteuerbar. Gewöhnlich wird der Federdruckkammer Druckluft zugeführt, wenn die Luftfeder auf Mindesthöhenniveau abfällt, um die Federungseigenschaften wieder herzustellen. Eine Entlüftung der Federdruckkammer erfolgt dagegen dann, wenn das Höhenniveau der Federanordnung reduziert werden soll.

Zu diesem Zweck besteht die Steuerventilanordnung bei diesem Stand der Technik gemäß einer der Ausführungsformen aus zwei Einzelventilen zum jeweils Be- und Entlüften der Federdruckkammer. Beide Einzelventile sind seitens des Abrollrohrs angeordnet und werden über ein federvorgespanntes mechanisches Betätigungsmittel, dass seitens des Außenrohres angebracht ist, betätigt. Das federvorgespannte mechanische Betätigungsmittel wirkt dabei entgegen einem ebenfalls federvorgespannten Betätigungsstößel der beiden Einzelventile. Je nach Federstärke und Grad der Federermüdung kann sich durch diese technische Lösung ein unbestimmter Schaltpunkt für die Ventilbetätigung ergeben. Insbesondere weil die Betätigungsstößel bei diesem Stand der Technik von unterschiedlicher Länge sind und gleichsinnig betätigt werden, kann es zu unerwünschten Überlagerungen von Schaltzuständen kommen.

Die EP 1 327 538 A2 offenbart eine Luftfederanordnung mit ebenfalls integrierter Steuerventilanordnung zur Be- oder Entlüftung der Federdruckkammer. Die Betätigung der Steuerventilanordnung erfolgt hier über ein ebenfalls innerhalb der Luftfeder angeordnetes Steuerelement, das an einem der beiden relativ zueinander beweglichen Luftfederbaugruppen Abrollrohr oder Außenrohr angreift. Das Steuerelement weist eine Wirklänge auf, welche kürzer ist als die Hublänge der Luftfeder und von einer Feder gegen eine der zueinander beweglichen Luftfederbaugruppen vorgespannt ist. Darüber hinaus ist das Steuerelement relativ zu beiden Luftfederbaugruppen schwimmend gelagert, in dem eine zweite Feder, deren Kraftrichtung entgegen der vorgenannten ersten Feder wirksam ist, die Stellung des Steuerelements mitbestimmt. Durch die schwimmende Lagerung können sich ebenfalls über die Lebensdauer hinweg undefinierte Schaltzustände einstellen. Dies bedeutet, dass eine Be- oder Entlüftung der Federdruckkammer nicht wie gewünscht bei einer definierten Hubstellung der Luftfederanordnung zuverlässig ausgelöst wird.

Die DE 100 03 045 A1 offenbart eine andere Luftfederanordnung mit integrierter Steuerventilanordnung sowie mechanische Betätigungsmittel zur Betätigung der Steuerventilanordnung. Das Betätigungsmittel weist eine Führungsbahn auf und greift an einem der beiden relativ zueinander beweglichen Luftfederbaugruppen an. Zusammenwirkend hiermit ist die Steuerventilanordnung als Drehschieberventil ausgebildet, wobei die Führungsbahn der Betätigungsmittel kürzer ausgeführt ist als die Hublänge der Luftfeder und die Betätigungsmittel in lösbarer Wirkverbindung mit der diese tragende Luftfederbaugruppe steht. Zwar ist durch diesen Mechanismus eine korrektere Ventilbetätigung erzielbar, allerdings erfolgt eine Ventilbetätigung nicht über den gesamten Luftfederhubweg, so dass es zumindest in extremen Endlagenpositionen zu undefinierten Schaltstellungen kommen kann.

Die DE 10 2009 046 290 B3 und EP 2 581 625 A2 offenbaren weitere relevante Luftfederanordnungen.

Es ist daher die Aufgabe der vorliegenden Erfindung eine Luftfederanordnung mit einer integrierten Steuerventilanordnung der gattungsgemäßen Art dahingehend weiter zu verbessern, dass über die gesamte Lebenszeit eine zuverlässige Be- und Entlüftung der Federdruckkammer in allen Hubstellung sichergestellt wird.

Die Aufgabe wird ausgehend von einer Luftfederanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das Belüftungsventil der Steuerventilanordnung gegenüberliegend dem Entlüftungsventil mit einander zugewandten Betätigungsstößeln angeordnet ist, wobei die dazwischenliegend hierauf einwirkenden mechanischen Betätigungsmittel eine am Außenrohr oder Abrollrohr einseitig angebrachte Schaltstange umfassen, deren einander gegenüberliegende und je einem der Betätigungsstößel zugeordneten Gleitbahnen zur hubstellungsabhängigen Ventilbetätigung auf die Betätigungsstößel einwirken.

Der Vorteil der erfindungsgemäßen Lösung liegt insbesondere darin, dass durch die federlose Ankopplung der mechanischen Betätigungsmittel an die Steuerventilanordnung diesbezügliche Fertigungstoleranzen und Ermüdungserscheinungen keinen Einfluss auf die Schaltzustände der Steuerventilanordnung haben. Über den gesamten Luftfederhubweg ist die Schaltstellung des Belüftungsventils und des Entlüftungsventils und insbesondere die relative Schaltstellung zueinander stets definiert, so dass es insbesondere auch nicht zu Überströmverlusten während eines Schaltstellungswechsels kommen kann. Die erfindungsgemäße Lösung bildet eine Art Zwangsführung der Ventilbetätigung, welche mit einem geringen bauteiltechnischen Aufwand erreicht wird.

Im Hinblick auf eine besonders bauraumsparende Lösung wird vorgeschlagen, dass die Betätigungsstößel von Belüftungsventil und Entlüftungsventil in einem stumpfen Winkel zueinander angeordnet sind, um die Ventilanordnung im Bereich des Abrollrohres zu integrieren. Der stumpfe Winkel liegt dabei horizontal gegenüber der Längsachse der Luftfederanordnung innerhalb des zylindrischen Abrollrohres und nutzt somit einen hierin vorhandenen hohlzylindersegmentförmigen Bauraum zur platzsparenden Unterbringung der Steuerventilanordnung.

Diese kann auch in eine entsprechend dicke Wandung des zylindrischen Abrollrohres integriert werden.

Vorzugsweise sind das Belüftungsventil und das Entlüftungsventil als federrückgestellte monostabile 2/2-Wege-Schieberventile ausgebildet. Die Rückstellfeder dient dabei dem Andrücken des Betätigungsstößels an die zugeordnete Gleitbahn der Schaltstange. Durch die Trennung der Steuerventilanordnung in zwei mit einfacher Ventilfunktion ausgebildeten Einzelventilen lässt sich ein besonders robuster Aufbau erzielen.

Gemäß einer weiteren die Erfindung verbessernden Maßnahme wird vorgeschlagen, dass die einseitige Anbringung der Schaltstange am Außenrohr oder Abrollrohr der Luftfederanordnung über eine Gelenkanordnung oder dergleichen zum Ausgleich der nicht-axialen Relativbewegungen zwischen Außenrohr und Abrollrohr erfolgt. Durch die Ankopplung der Schaltstange über die Gelenkanordnung sind die während des Betriebes der Luftfederanordnung auftretenden Relativbewegungen ausgleichbar, ohne dass die Präzision der Ventilbetätigung hierdurch beeinflusst wird.

Die derart einseitig am Außenrohr oder Abrollrohr gelenkig angebrachte Schaltstange ist gemäß einer anderen die Erfindung verbessernden Maßnahme an der gegenüberliegenden Baugruppe, nämlich dem Abrollrohr bzw. Außenrohr, entlang der Längsbewegung geführt. Dies kann beispielsweise derart erfolgen, dass die Schaltstange in eine korrespondierende Ausnehmung unter Wahrung einer geringfügigen Spielpassung hineinragt. Die Spielpassung ist dabei so zu bemessen, dass einerseits die Axialbewegung mit der Schaltstange nicht behindert wird und andererseits ein möglichst geringes Passungsspiel vorhanden ist, um die Präzision der Ventilbetätigung sicherzustellen.

Im Hinblick auf die Ausgestaltung der den beiden Ventilen je zugeordneten Gleitbahnen der Schaltstange wird vorgeschlagen, dass diese einen oberen, dem Belüftungsventil zugeordneten Bahnabschnitt zur Betätigung desselben im Bereich einer unteren Hubstellung der Luftfederanordnung vorgesehen ist, wogegen das Entlüftungsventil durch eine diesen Bahnabschnitt gegenüberliegenden Bahnabschnitt unbetätigt bleibt. Dies bewirkt ein Wiederauffüllen der Federdruckkammer mit Druckluft, falls die Federbelastung ansteigt und/oder nicht mehr genügend Druckluft für eine wirksame Luftfederung zur Verfügung steht.

Andererseits können die Gleitbahnen der Schaltstange einem dem Entlüftungsventil zugeordneten unteren Bahnabschnitt zum Betätigen des Entlüftungsventils im Bereich einer oberen Luftfederhubstellung und einen diesen gegenüberliegenden Bahnabschnitt zum Beibehalten der Schließstellung des Belüftungsventils umfassen. Hierbei kann Druckluft aus der Federdruckkammer entweichen, falls sich die Federbelastung verringert und insoweit ein für den gewünschten Grad der Luftfederung zu hoher Luftdruck innerhalb der Federdruckkammer herrscht.

Zwischen dem vorstehend erläuterten Bereich einer zu niedrigen Luftfederhubstellung und zu hohen Luftfederhubstellung wird im Bereich eines mittleren Bahnabschnitts der Gleitbahnen der Schaltstange das Belüftungsventil und auch das Entlüftungsventil in der Schließstellung gehalten. Dies erfolgt während des normalen Luftfederbetriebs, bei welchem weder eine Belüftung noch Entlüftung der Federdruckkammer erforderlich ist, weil die gewünschten Federungseigenschaften vorhanden sind.

Zur Erleichterung der Ventilbetätigung wird gemäß einer anderen die Erfindung verbessernden Maßnahme vorgeschlagen, dass zwischen der Gleitbahn der Schaltstange und der Stirnseite des zugeordneten Betätigungsstößels ein Wälzelement angeordnet ist. Dieses Wälzelement kann beispielsweise ein Wälzlagerelement in Form eines Zylinder- oder Kugelelements aus Stahl sein.

### Kurzbeschreibung der Zeichnung

Weitere die Erfindung verbessernden Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Darstellung einer Luftfederanordnung mit integrierter Steuerventilanordnung,
- Figur 2: eine schematische Steuerventilanordnung in einer oberen Luftfederhubstellung,
- Figur 3: eine schematische Darstellung der Luftfederanordnung in einer unteren Luftfederhubstellung, und
- Figur 4: eine schematische Darstellung der Luftfederanordnung in einer mittleren Luftfederhubstellung.

### Detailbeschreibung eines Ausführungsbeispiels

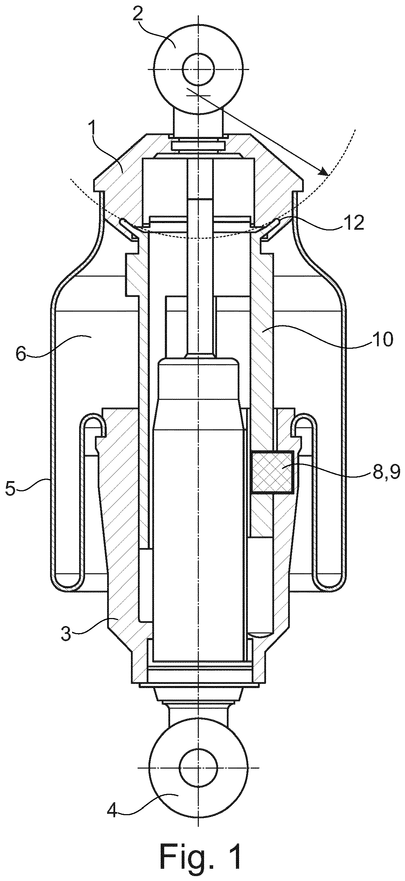

Gemäß Figur 1 besteht die Luftfederanordnung im Wesentlichen aus einem Außenrohr 1 mit oberer Befestigungsöse 2 zur Anbringung an ein Fahrerhaus eines nicht weiter dargestellten Nutzfahrzeuges sowie einem Abrollrohr 3 mit unterer Befestigungsöse 4 zur Anbringung in der Luftfederanordnung an einem Fahrgestell des Nutzfahrzeuges. Das Außenrohr 1 ist mit dem Abrollrohr 3 durch einen Luftfederbalg 5 verbunden, so dass sich zwischen dem Außenrohr 1, dem Abrollrohr 3 und dem Luftfederbalg 5 eine Federdruckkammer 6 bildet. Die Luftfeder wirkt mit einem integriertem hydraulischen Stoßdämpfer 7 zusammen, welcher zum Abdämpfen der gefederten Masse dient.

Die Federdruckkammer 6 der Luftfederanordnung lässt sich über eine integrierte Steuerventilanordnung, bestehend aus einem einzelnen Belüftungsventil 8 und einem einzelnen Entlüftungsventil 9, je nach Belastung mit Druckluft beaufschlagen. Das Belüftungsventil 8 und das Entlüftungsventil 9 sind durch ebenfalls integrierte mechanische Betätigungsmittel in Form einer seitens des Außenrohrs 1 angebrachten Schaltstange 10 nach Maßgabe der Luftfederhubstellung ansteuerbar.

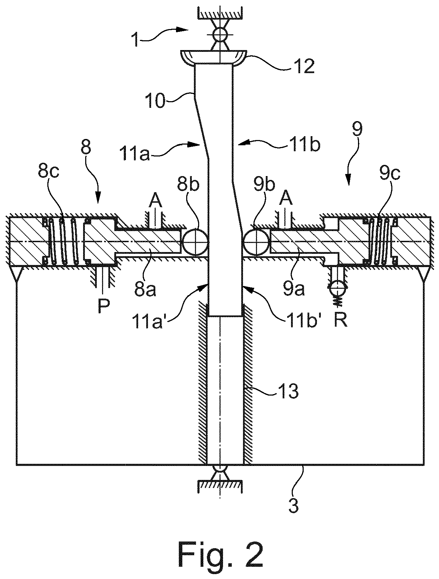

Gemäß Figur 2 ist das Entlüftungsventil 9 gegenüberliegend dem Belüftungsventil 8 mit einander zugewandten Betätigungsstößeln 8a und 9a angeordnet. Die rechtwinklig hierzu entlang des Luftfederhubs bewegbare Schaltstange 10 weist zwei gegenüberliegend hieran ausgebildete Gleitbahnen 1 la und 11b auf. Während die Gleitbahn 11a dem Belüftungsventil 8 zugeordnet ist und mit dessen Betätigungsstößel 8a zusammenwirkt, wirkt die gegenüberliegende Gleitbahn 11b mit dem Entlüftungsventil 9 über dessen Betätigungsstößel 9a zusammen. Die Gleitbahnen 11a und 11b der Schaltstange 10 erstrecken sich über den gesamten Luftfederhubweg, um stets eine definierte Schaltstellung der Steuerventilanordnung sicherzustellen.

Die einseitig am Außenrohr 1 über eine Kugelgelenkanordnung 12 angebrachte Schaltstange 10 ist seitens des Abrollrohres 3 über einen Führungskanal 13 entlang der Längsbewegung geführt. Das Belüftungsventil 8 und das Entlüftungsventil 9 sind als federrückgestellte monostabile 2/2-Wege-Schieberventile ausgebildet. Die jeweils integrierten Rückstellfedern 8c bzw. 9c beaufschlagen den zugeordneten Betätigungsstößel 8a bzw. 9a, der über ein Wälzlagerelement 8b bzw. 9b an der zugeordneten Gleitbahn 11a bzw. 11b der Schaltstange 10 zur Anlage kommt. In der hier dargestellten Schaltstellung betätigt ein unterer Bahnabschnitt 11b' das Entlüftungsventil 9 im Bereich einer oberen Luftfederhubstellung. Der gegenüberliegende Bahnabschnitt 11a' betätigt das Belüftungsventil 8 nicht, so dass, in Ergebnis dessen eine Entlüftung der Federdruckkammer herbeigeführt wird.

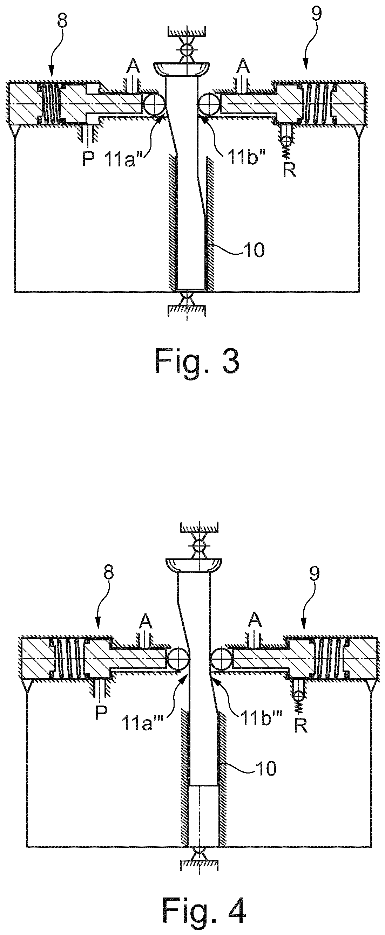

Bei der in Figur 3 dargestellten Schaltstellung betätigt die Schaltstange 10 im Bereich einer niedrigen Luftfederhubstellung über den oberen Bahnabschnitt 11a" des Belüftungsventils 8. Der dem Bahnabschnitt 11a" gegenüberliegende Bahnabschnitt 11b" sorgt für eine Beibehaltung der Schließstellung des Entlüftungsventils 9. In Folge dessen wird in der dargestellten niedrigen Luftfederhubstellung die Federdruckkammer belüftet.

Gemäß Figur 4 ist zwischen dem beidseits unteren Bahnabschnitt 11a' und 11b' der Schaltstange 10 und deren beidseits oberen Bahnabschnitt 11a" und 11b" ein beidseits mittlerer Bahnabschnitt 11a'" und 11b'" vorgesehen. Im mittleren Bahnabschnitt 11a"' und 11b'" werden sowohl das Belüftungsventil 8 als auch das Entlüftungsventil 9 in ihrer jeweiligen Schließstellung gehalten. Dieser mittlere Bahnabschnitt der 11a'" und 11b'" der Schaltstange 10 entspricht einer mittleren Luftfederhubstellung, bei welcher weder eine Entlüftung noch eine Belüftung der Federdruckkammer durchgeführt wird.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, die Steuerventilanordnung seitens des Außenrohrs 1 anstatt des Abrollrohrs 3 zu integrieren und die diese betätigende Schaltstange 10 seitens des Abrollrohres 1.

### Bezugszeichenliste

- 1: Außenrohr
- 2: Befestigungsöse
- 3: Abrollrohr
- 4: Befestigungsöse
- 5: Luftfederbalg
- 6: Federdruckkammer
- 7: Stoßdämpfer
- 8: Belüftungsventil
- 9: Entlüftungsventil
- 10: Schaltstange
- 11: Gleitbahn (-abschnitt)
- 12: Kugelgelenkanordnung
- 13: Führungskanal

- A: Arbeitsanschluss
- P: Speisedruckanschluss
- R: Entlüftungsanschluss

## Patentansprüche

1. Luftfederanordnung mit einer integrierten Steuerventilanordnung zur Druckluftbeaufschlagung einer zwischen einem Außenrohr (1), einem Abrollrohr (3) und einem diese Bauteile verbindenden Luftfederbalg (5) gebildeten Federdruckkammer (6), wobei die Steuerventilanordnung aus einem einzelnen Belüftungsventil (8) und einem einzelnen Entlüftungsventil (9) besteht, die durch ebenfalls integrierte mechanische Betätigungsmittel nach Maßgabe der Luftfederhubstellung zum Be- oder Entlüften der Federdruckkammer (6) betätigbar sind,
**dadurch gekennzeichnet, dass** das Belüftungsventil (8) gegenüberliegend dem Entlüftungsventil (9) mit einander zugewandten Betätigungsstößeln (8a; 9a) angeordnet ist, wobei die dazwischenliegend hierauf einwirkenden mechanischen Betätigungsmittel eine am Außenrohr (1) oder Abrollrohr (3) einseitig angebrachte Schaltstange (10) umfassen, deren gegenüberliegende und je einem der Betätigungsstößel (8a; 9a) zugeordneten Gleitbahnen (11a, 11b) zur hubstellungsabhängigen Ventilbetätigung auf die Betätigungsstößel (8a; 9a) einwirken.

2. Luftfederanordnung nach Anspruch 1,
**dadurch gekennzeichnet, dass** sich die Gleitbahnen (11a, 11b) der Schaltstange (10) über den gesamten Luftfederhubweg erstrecken.

3. Luftfederanordnung nach Anspruch 1,
**dadurch gekennzeichnet, dass** die Betätigungsstößel (8a, 9a) von Belüftungsventil (8) und Entlüftungsventil (9) in einer auf die Federrichtung in etwa senkrechte Ebene und in einem horizontal stumpfen Winkel zueinander angeordnet sind, um die Ventilanordnung im Bereich des zylindrischen Abrollrohres (3) zu integrieren.

4. Luftfederanordnung nach Anspruch 1,
**dadurch gekennzeichnet, dass** das Belüftungsventil (8) und das Entlüftungsventil (9) als federrückgestellte monostabile 2/2-Wege-Ventile in Schieber- oder Sitzventilbauweise ausgebildet sind.

5. Luftfederanordnung nach Anspruch 1,
**dadurch gekennzeichnet, dass** sich die geöffneten Strömungsquerschnitte des Belüftungsventils (8) und/oder des Entlüftungsventils (9) abhängig von der linearen Bewegung der Betätigungsstößel (8a; 9a) ändern.

6. Luftfederanordnung nach Anspruch 1,
**dadurch gekennzeichnet, dass** die einseitige Anbringung der Schaltstange (10) am Außenrohr (1) oder Abrollrohr (10) über eine zu der Längsachse der Luftfederanordnung koaxialen Kugelgelenkanordnung (12) zum Ausgleich der nicht-axialen Relativbewegungen zwischen Außenrohr (1) und Abrollrohr (3) erfolgt.

7. Luftfederanordnung nach Anspruch 1,
**dadurch gekennzeichnet, dass** die einseitig am Außenrohr (1) oder Abrollrohr (3) gelenkig angebrachte Schaltstange (10) am Abrollrohr (3) bzw. Außenrohr (1) über einen Führungskanal (13) entlang der Längsbewegung geführt ist.

8. Luftfederanordnung nach Anspruch 1,
**dadurch gekennzeichnet, dass** die Gleitbahnen (11a, 11b) der Schaltstange (10) einen dem Belüftungsventil (8) zugeordneten oberen Bahnabschnitt (11a") zum Betätigen des Belüftungsventils (8) im Bereich einer niedrigen Luftfederhubstellung und einen diesem gegenüberliegenden Bahnabschnitt (11b") zum Beibehalten der Schließstellung des Entlüftungsventils (9) umfassen.

9. Luftfederanordnung nach Anspruch 1,
**dadurch gekennzeichnet, dass** die Gleitbahnen (11a, 11b) der Schaltstange (10) einen dem Entlüftungsventil (9) zugeordneten unteren Bahnabschnitt (11b') zum Betätigen des Entlüftungsventils (9) im Bereich einer oberen Luftfederhubstellung und einen diesem gegenüberliegenden Bahnabschnitt (11a') zum Beibehalten der Schließstellung des Belüftungsventils (8) umfassen.

10. Luftfederanordnung nach den Ansprüchen 8 und 9,
**dadurch gekennzeichnet, dass** von den Bahnabschnitten (11a", 11b") das Belüftungsventil (8) und/oder das Entlüftungsventil (9) zwar abhängig von der Hubbewegung der Federanordnung, aber nicht linear proportional damit geöffnet oder geschlossen wird.

11. Luftfederanordnung nach Anspruch 7 und 8,
**dadurch gekennzeichnet, dass** zwischen dem unteren und dem oberen Bahnabschnitt (11a', 11b'; 11a", 11b") ein mittlerer Bahnabschnitt (11a"', 11b'") vorgesehen ist, welcher das Belüftungsventil (8) und das Entlüftungsventil (9) in mittlerer Luftfederhubstellung in der Schließstellung hält.

12. Luftfederanordnung nach Anspruch 1,
**dadurch gekennzeichnet, dass** zwischen der Gleitbahn (11a; 11b) der Schaltstange (10) und der Stirnseite des zugeordneten Betätigungsstößels (8a; 9a) ein Wälzelement (8b; 9b) angeordnet.

## Claims

1. Air spring arrangement having an integrated control valve arrangement for the admission of compressed air into a spring pressure chamber (6) formed between an outer tube (1), a rolling tube (3) and an air spring bellows (5) which connects said components, wherein the control valve arrangement consists of an individual ventilation valve (8) and an individual venting valve (9), which are actuable by likewise integrated, mechanical actuating means in accordance with the air spring stroke position in order to ventilate or vent the spring pressure chamber (6),
**characterised in that** the ventilation valve (8) is arranged opposite the venting valve (9), with actuating tappets (8a; 9a) facing each other, wherein the mechanical actuating means which act on the actuating tappets while lying therebetween comprise a switching rod (10) which is attached at one end to the outer tube (1) or rolling tube (3) and the sliding tracks (11a, 11b) of which switching rod, which are opposite each other and are each assigned to one of the actuating tappets (8a; 9a), act on the actuating tappets (8a; 9a) in order to actuate the valves depending on the stroke position.

2. Air spring arrangement according to claim 1,
**characterised in that** the sliding tracks (11a, 11b) of the switching rod (10) extend over the entire air spring stroke travel.

3. Air spring arrangement according to claim 1,
**characterised in that** the actuating tappets (8a, 9a) of ventilation valve (8) and venting valve (9) are arranged in a plane which is approximately perpendicular to the spring direction and at a horizontally obtuse angle to each other, in order to integrate the valve arrangement in the region of the cylindrical rolling tube (3).

4. Air spring arrangement according to claim 1,
**characterised in that** the ventilation valve (8) and the venting valve (9) are designed as spring-reset monostable 2/2-way valves of slide valve or seat valve construction.

5. Air spring arrangement according to claim 1,
**characterised in that** the open flow cross sections of the ventilation valve (8) and/or of the venting valve (9) change depending on the linear movement of the actuating tappets (8a; 9a).

6. Air spring arrangement according to claim 1,
**characterised in that** the attaching of the switching rod (10) on one side to the outer tube (1) or rolling tube (10) takes place via a ball and socket arrangement (12), which is coaxial with the longitudinal axis of the air spring arrangement, in order to compensate for the non-axial relative movements between outer tube (1) and rolling tube (3).

7. Air spring arrangement according to claim 1,
**characterised in that** the switching rod (10) which is attached in an articulated manner on one side to the outer tube (1) or rolling tube (3) is guided along the longitudinal movement on the rolling tube (3) or outer tube (1) via a guide channel (13).

8. Air spring arrangement according to claim 1,
**characterised in that** the sliding tracks (11a, 11b) of the switching rod (10) comprise an upper track portion (11a") which is assigned to the ventilation valve (8), for actuating the ventilation valve (8) in the region of a low air spring stroke position, and a track portion (11b"), which lies opposite said upper track portion, for maintaining the closed position of the venting valve (9).

9. Air spring arrangement according to claim 1,
**characterised in that** the sliding tracks (11a, 11b) of the switching rod (10) comprise a lower track portion (11b'), which is assigned to the venting valve (9), for actuating the venting valve (9) in the region of an upper air spring stroke position, and a track portion (11a'), which is opposite said lower track portion, for maintaining the closed position of the ventilation valve (8).

10. Air spring arrangement according to claims 8 and 9,
**characterised in that** the ventilation valve (8) and/or the venting valve (9) are/is indeed opened or closed by the track portions (11a"; 11b") depending on the stroke movement of the spring arrangement, but not proportionally therewith in a linear fashion.

11. Air spring arrangement according to claims 7 and 8,
**characterised in that** a middle track portion (11a"', 11b'") is provided between the lower and the upper track portion (11a', 11b'; 11a", 11b"), said middle track portion keeping the ventilation valve (8) and the venting valve (9) in the closed position in the middle air spring stroke position.

12. Air spring arrangement according to claim 1,
**characterised in that** a rolling element (8b; 9b) is arranged between the sliding track (11a; 11b) of the switching rod (10) and the end face of the assigned actuating tappet (8a; 9a).

## Revendications

1. Agencement de suspension pneumatique, comprenant un agencement intégré de vanne pilote pour l'alimentation en air comprimé d'une chambre (6) à pression de ressort, formée entre un tuyau (1) extérieur, un tuyau (3) de déroulement et un soufflet (5) formant ressort pneumatique et reliant ces éléments constitutifs, l'agencement de vanne pilote étant constitué d'une vanne (8) indépendante d'alimentation en air et d'une vanne (9) indépendante de purge d'air, qui peuvent, pour l'alimentation en air ou la purge d'air de la chambre (6) à pression de ressort, être actionnées par des moyens d'actionnement mécaniques également intégrés, en fonction de la position de course du ressort pneumatique,
**caractérisé en ce que** la vanne (8) d'alimentation en air est disposée en opposition à la vanne (9) de purge d'air, en ayant des poussoirs (8a; 9a) d'actionnement tournés l'un vers l'autre, les moyens d'actionnement mécaniques intermédiaires y agissant comprenant une tige (10) de manoeuvre mise d'un côté sur le tuyau (1) extérieur ou sur le tuyau (3) de déroulement, dont les pistes (11a, 11b) de glissement, opposées et associées respectivement à l'un des poussoirs (8a; 9a) d'actionnement, agissent pour l'actionnement de vanne en fonction de la position de course sur les poussoirs (8a; 9a) d'actionnement.

2. Agencement de ressort pneumatique suivant la revendication 1,
**caractérisé en ce que** les pistes (11a, 11b) de glissement de la barre (10) de manoeuvre s'étendent sur tout le trajet de course du ressort pneumatique.

3. Agencement de ressort pneumatique suivant la revendication 1,
**caractérisé en ce que** les poussoirs (8a, 9a) d'actionnement de la vanne (8) d'alimentation en air et de la vanne (9) de purge d'air sont disposés l'un par rapport à l'autre dans un plan à peu près perpendiculaire à la direction du ressort et suivant un angle obtus horizontalement, pour intégrer l'agencement de vanne dans la partie du tuyau (3) de déroulement cylindrique.

4. Agencement de ressort pneumatique suivant la revendication 1,
**caractérisé en ce que** la vanne (8) d'alimentation en air et la vanne (9) de purge d'air sont constituées en mode de construction de vanne à coulisse ou à siège, sous la forme de vanne 2/2 voies monostables à ressort de rappel.

5. Agencement de ressort pneumatique suivant la revendication 1,
**caractérisé en ce que** les sections transversales d'écoulement ouvertes de la vanne (8) d'alimentation en air et/ou de la vanne (9) de purge d'air se modifient en fonction du déplacement linéaire des poussoirs (8a; 9a) d'actionnement.

6. Agencement de ressort pneumatique suivant la revendication 1,
**caractérisé en ce que** le montage d'un côté de la tige (10) de manoeuvre sur le tuyau (1) extérieur ou le tuyau (3) de déroulement s'effectue pour compenser les mouvements relatifs non axiaux entre le tuyau (1) extérieur et le tuyau (3) de déroulement par un agencement (12) de rotule coaxial à l'axe longitudinal de l'agencement de ressort pneumatique.

7. Agencement de ressort pneumatique suivant la revendication 1,
**caractérisé en ce que** la tige (10) de manoeuvre, articulée d'un côté au tuyau (1) extérieur ou au tuyau (3) de déroulement, est guidée sur le tuyau (3) de déroulement ou le tuyau (1) extérieur, le long du déplacement longitudinal, par un canal (13) de guidage.

8. Agencement de ressort pneumatique suivant la revendication 1,
**caractérisé en ce que** les pistes (11a, 11b) de glissement de la tige (10) de manoeuvre comprennent un tronçon (11a") de piste supérieur associé à la vanne (8) d'alimentation en air pour actionner la vanne (8) d'alimentation en air dans la partie d'une position de course basse du ressort pneumatique et un tronçon (11b") de piste opposé pour conserver la position de fermeture de la vanne (9) de purge d'air.

9. Agencement de ressort pneumatique suivant la revendication 1,
**caractérisé en ce que** les pistes (11a, 11b) de glissement de la tige (10) de manoeuvre comprennent un tronçon (11b') de piste inférieur associé à la vanne (9) de purge d'air pour actionner la vanne (9) de purge d'air dans la partie d'une position de course supérieure du ressort pneumatique et un tronçon (11a') de piste opposé à celui-ci pour conserver la position de fermeture de la vanne (8) d'alimentation en air.

10. Agencement de ressort pneumatique suivant les revendications 8 et 9,
**caractérisé en ce que**, par les tronçons (11a"; 11b") de piste, la vanne (8) d'alimentation en air et/ou la vanne (9) de purge d'air est certes ouverte ou fermée en fonction du déplacement de course de l'agencement de ressort mais non proportionnellement d'une manière linéaire.

11. Agencement de ressort pneumatique suivant la revendication 7 et 8,
**caractérisé en ce qu'**entre le tronçon (11a', 11b'; 11a", 11b") de piste inférieur et supérieur est prévu un tronçon (11a"', 11b"') de piste médian, qui maintient, en la position de fermeture, la vanne (8) d'alimentation en air et la vanne (9) de purge d'air dans la position de course médiane du ressort pneumatique.

12. Agencement de ressort pneumatique suivant la revendication 1,
**caractérisé en ce qu'**un élément (8b; 9b) de roulement est mis entre la piste (11a; 11b) de glissement de la barre (10) de manoeuvre et le côté frontal du poussoir (8a; 9a) d'actionnement associé.
